# EUROPEAN PATENT SPECIFICATION

(11) **EP 4 221 550 B1**
(45) Date of publication and mention of the grant of the patent: **23.10.2024**
(21) Application number: 21785878.6
(22) Date of filing: 29.09.2021
(51) Int. Cl.: A47J 39/00

(54) **PORTABLE MULTIFUNCTIONAL CLIMATIC CHAMBER FOR THE THERMO-HYGROMETRIC TREATMENT OF FOOD**
TRAGBARE MULTIFUNKTIONELLE KLIMAKAMMER ZUR THERMOHYGROMETRISCHEN BEHANDLUNG VON LEBENSMITTELN
CHAMBRE CLIMATIQUE MULTIFONCTIONNELLE PORTATIVE DESTINÉE AU TRAITEMENT THERMO-HYGROMÉTRIQUE D'ALIMENTS

(30) Priority: 30.09.2020 IT 202000023035
(43) Date of publication of application: 09.08.2023
(73) Proprietor: Food Engineering S.r.l., 35134 Padova (IT)
(72) Inventor: RIZZOLO, Marco, 35012 Camposampiero (IT); CHIGGIATO, Massimo, 35012 Camposampiero (IT)
(74) Representative: Mittler, Enrico
(86) International application number: PCT/EP2021/076769
(87) International publication number: WO 2022/069530

(56) References cited:
- EP-A1- 2 716 190
- EP-A1- 3 338 603
- DE-A1- 2 431 546
- FR-A1- 2 954 062

## Description

The present invention relates to a portable multifunctional climatic chamber suitable for various thermo-hygrometric treatments of food, also usable in environments which are not prepared for the purpose.

In particular, the invention relates to a climatic chamber which is suited for all restaurateurs, catering companies, bakeries, delicatessens, and possibly also non-professionals, who need equipment for regenerating blast-chilled finished or semi-finished dishes, maintaining the temperature of dishes ready to be served and for proofing baked goods.

In the last few years, many restaurateurs have found themselves in the condition of needing to work efficiently in extremely confined spaces. Choosing the best cooking equipment is crucial in this case and factors such as footprint and multifunctionality are extremely important. Operators are no longer concerned with using traditional cooking equipment to achieve the desired results because the important factor is now to use the wide range of technologies available to them to produce high-quality food for the customer every time, even if it means using less conventional cooking methods. Nowadays, the focus is more on the food, the current trends, and the speed of delivery to the customer rather than having lots of traditional kits in the kitchen. Worldwide, as kitchens increasingly dominate both the classic restaurant and food delivery scene, traditional restaurateurs must be able to incorporate new food trends, innovative cooking methods, and exceptional skills into their kitchens.

Performance and energy efficiency are decisive characteristics for operators who choose prime-quality cooking equipment, which has a higher cost but is very convenient in the long run, permitting significant savings on the energy used and above all on the cost of personnel, which may be reduced by up to 50%, with a significant return on investment.

It is also more and more common to organize banquets of various kinds, for conferences, official receptions, weddings and other, inside villas, castles, and other prestigious historical buildings, in which the preparation of food, usually refined, innovative and modern, is not compatible with the aging cooking equipment in the building chosen for the banquet.

Hence the need, for restaurateurs operating in such contexts, to have transportable equipment to be positioned each time in the buildings used for the banquet to overcome the inadequacies of the buildings themselves for catering purposes and also allow the remote preparation of food to be finished on site.

An analysis of the current art in the field of the production of mobile equipment for the catering industry has revealed the total absence of a product with truly satisfactory characteristics of efficiency, versatility, and compactness.

In particular, the existing conventional ovens designed for baking and also used for finishing are impractical, bulky, and difficult to move. On the other hand, the ovens are designed for cooking and their main function is to ensure the cooking of food in an operating temperature range from 70°C to 300°C, guaranteeing fast and high-performance temperature gradients. However, using an oven to heat a pre-cooked dish, maintain it, possibly perform a 5-hour proofing process or a 12-hours drying or dehydrating process means keeping the equipment occupied on the kitchen production line for functions it was not designed for, with a higher energy consumption not consistent with the work performed. Furthermore, it is also worth noting that the known ovens, with a capacity equivalent to that of the invention at hand, have a weight varying from 100 kg to 180 kg, so they require logistics (trucks with hydraulic tailboard, manual pallet trucks) to be transported to different places, as well as an electrical power and plumbing network available on site.

Food warmer cabinets that maintain and regenerate the temperature of ready-made dishes are also known. They can be used to regenerate plates from positive (+2°C) or negative (-18°C) temperatures with a probe that can warm products to a temperature higher than 65°C. They also have the automatic ability to add humidity to the food being regenerated and adjust the speed of an aeration fan. However, this compact equipment is suitable for installation in structures and not for being moved.

Other warming cabinets typically used to keep food warm in hospitals and health care settings are statically heated, bulky, and not suitable for in-line operations. These devices perform only one function, i.e., they either keep the dishes warm (heat chain 65°C) or keep them refrigerated (cold chain <10°C), and thus they are not versatile.

There is also a piece of equipment which is substantially an insulated hot box-like cabinet in which an oven grill combined with said cabinet can be kept and transported. After cooking the food in the oven, the grill is simply slid directly into the hot cabinet, which can then be transported to the dining room. The heavy weight and impossibility to close the equipment again make it difficult to use in multi-story buildings. Furthermore, the oven-holder carriage is not comprised in the assembly and is provided separately by the oven manufacturer.

All of this known equipment displays difficulties of transportation and poor versatility of use, meaning that any one piece of equipment is individually usable for specific operations but not for all the operations which may be required for the treatment of food of various kinds, such as warming, regenerating, dehumidifying, cooling and more.

DE 24 31 546 A1, which is regarded as the closest prior art, discloses a portable multifunctional climatic chamber for thermic treatment of food, comprising a vertically extending frame formed by a base element, a top element and a pair of lateral shoulders which connect said base and top elements to define an operative space which is provided with means for positioning food-bearing planes and is coverable with a thermic cover, wherein said top element comprises a heating unit and a ventilation unit which is controllable to intake ascending air from said operative space.

The specific purpose of the present invention is to make an easily transportable and installable piece of equipment which can meet all the needs that may arise for large-scale catering in buildings which are not prepared for the purpose.

In particular, it is the object of the invention to make a portable piece of equipment which can be used as a multifunctional climatic chamber, in a hot and cold chain, with internal control of thermo-hygrometric conditions, capable of satisfying a plurality of needs, such as in particular:
- Regenerating finished or semi-finished dishes which were blast-chilled to 5°C returning them to the optimal serving temperature, with relative humidity control (from 15% to 90%). Food regeneration is a process the purpose of which is to maintain the quality of food by bringing blast-chilled (5°C) or rapidly packaged food to consumption temperature in the most gentle way. Regenerating means returning a cooked and blast-chilled product to its original state. This step is very delicate because, if not done correctly, it risks compromising the good work done in the previous steps. In a warming oven, everything must be calibrated starting from the ventilation, which must ensure uniform temperatures inside the chamber to reactivate the food in the times and manner compliant with the HACCP protocol or other international regulations, avoiding ruining the dishes, e.g. by drying them out. These products have already undergone a transformation (cooking) and - especially the most delicate ones, such as vegetables or fish - can be reactivated ensuring quality only by achieving the right balance between time, ventilation, temperature, and humidity without running the risk of cooking them again. Regeneration under normal conditions should be conducted in a slow and uniform process with the right relative humidity to avoid thermal shocks to the product. If regeneration must be done in a short time, this being a situation in which it is necessary to increase the regeneration temperature, it becomes very important to increase the humidity to higher values, taking them even to saturation. In this context, measuring and regulating humidity are very important because little humidity dries out the final product, whereas too much humidity waters down the dishes, making them inedible and unpresentable. It is important to remember that humidity favors the insertion of heat in the product, i.e., a product cooked in a humid environment cooks faster than one in a dry environment.

- Maintaining the temperature of ready-made dishes before serving, in hot chain from 50°C to 70°C or in cold chain from 5°C to 10°C, with control and regulation of relative humidity as well as temperature, performed by a programmable logic controller. In this manner, the present invention performs the function of a kitchen service pass in the case of large buffet events, while at the same time complying with HACCP regulations and the organoleptic qualities of the dish.
- Proofing baked goods, maintaining optimal thermo-hygrometric conditions (30°C to 36°C and 60% of relative humidity), in particular with natural yeasts. It is worth noting that, as known, the process of bread baking in an oven consists of four steps at increasing temperatures (T=30-40°C completion of fermentation, T=40-60°C beginning of starch solidification, T=60-80°C completion of starch solidification, T=100-140°C evaporation of water and crust formation). Furthermore, bread proofing is characterized by many moments (pre-proofing, punching down, proofing, first step of baking in the oven), where pre-proofing is the most important step of the process. There are several schools of thought regarding the latter process step. Indeed, this step can last from few minutes (30 minutes) to several hours (24-48 hours) and is characterized by fermentation at controlled temperature and humidity (30-35°C) or by fermentation in a refrigerated environment (10°C), which is known as very long sour fermentation. This step leads to the use, in some cases, of sourdough and to productions characterized by a low pH of the dough (<5) due to the prevalence of acid-lactic fermentations which develop at low temperatures compared to traditional fermentation with brewer's yeast. This step is characterized by the production of enzymes which facilitate the gluten chain breakdown (proteolysis) and allow an easier digestibility, more fragrant freshly baked bread, and longer shelf life of the bread itself. In any event, the stability of the thermo-hygrometric conditions to which the product is subjected is fundamental for a successful proofing process. Again, in this case, the programmable logic controller allows the user to set the most varied parameters and control during the process to satisfy the multitude of requests from chefs.

- Drying vegetables at temperatures from 30°C to 60°C with humidity extraction (<15%). These are slow processes which take place over a long time, in which the treated product must not be subjected to thermal shocks, which could ruin it or alter its organoleptic properties.
- Drying fresh pasta according to the main cycles: slow cycle at low temperature (24-72 hours at a temperature not higher than 40-50°C); high-temperature cycle (8-10 hours at a temperature not higher than 75-80°C). It is known that drying is a very complex process characterized by two phenomena occurring at the same time, namely: a) a heat conveyance phenomenon, characterized by a thermal flow coming from the external environment and directed towards the item, which causes the evaporation of water until the balance is reached; b) a matter conveyance phenomenon, characterized by a flow of water moving through the solid matrix of the food (in liquid or vapor form) and from the surface layer of the food towards the external environment (in the form of water vapor). The drying rate depends on the speed of these two phenomena; in particular, it is affected by the speed of the process.

Taking all these needs into account, the present invention achieves the purpose by means of a multifunctional climatic chamber comprising a vertically extending frame formed by a base element, a top element and a pair of lateral shoulders which connect said base and top elements to define an operative space which is provided with means for positioning food-bearing planes and coverable with thermic covers, said climatic chamber being characterized in that said base element comprises a heating unit, said top element comprises a ventilation unit which is controllable to intake air from said operative space or introduce air into the same space and said lateral shoulders are provided with channelized vertical plates run along by vertical channels which communicate at the bottom with said heating unit and further communicate at the top with said ventilation unit to be alternatively run along by descending or ascending air flows according to whether said ventilation unit intakes from said operative space or introduces it as an air veil, said vertical channels being further in communication with said operative space through transversal slits formed at different heights in said channelized plates and there being provided inside said channelized plates oblique deflectors alternated with said slits to deviate partially into said operative space the descending air flows which run along said channels when said ventilation unit intakes air from said operative space and partially deviate the ascending air flows in said channels said descending air veil introduced by said ventilation unit in said operative space.

Advantageously, the climatic chamber base element further provides a humidity generation unit associated with said heating unit and a humidity extraction system through a vent valve controlled by a programmable logic controller.

A cooling unit can also be mounted on the top element as an accessory to provide the desired degree of cooling to the air veil descending within the thermal space when required for various needs.

To achieve the objectives described above with quality and precision, such as regenerating food, keeping ready-made meals at the correct temperature, proofing baked products, etc., in addition to having temperature and relative humidity sensors inside the operative space to measure the thermo-hygrometric properties of said space at different points, the climatic chamber has and is managed by a programmable logic controller containing the control logics of the heating, cooling, ventilation and humidity devices and can drive the implementation devices based on information derived from the process status in real-time.

A practical embodiment of the climatic chamber according to the present invention is shown by way of non-limiting example in the accompanying drawings, in which:
figure 1 shows an axonometric view of the assembled climatic chamber, still without the thermic cover:
figure 2 shows the same climatic chamber once assembled and provided with a thermic cover;
figure 3 shows the same climatic chamber not yet assembled:
figure 4 shows the climatic chamber free from thermic cover, seen from the left relative to figure 1;
figure 5 shows the climatic chamber free from thermic cover, seen from the right relative to figure 1;
figure 6 shows the climatic chamber free from thermic cover in a front section taken along line VI-VI in figure 4;
figure 7 shows an enlarged detail of climatic chamber sections as in figure 6;
figure 8 shows a horizontal section view of said climatic chamber taken along line VIII-VIII in figure 4;
figure 9 shows a horizontal section view of said climatic chamber taken along line IX-IX in figure 4;
figure 10 shows a diagrammatic, exploded view of the base element of said climatic chamber;
figure 11 shows a diagrammatic, exploded view of the top element of said climatic chamber;
figure 12 shows the control logics diagram of the climatic chamber of the previous figures;
figure 13 is an axonometric view similar to the one in figure 1 with the addition of the cooling unit;
figures 14-16 show views similar to those in figures 4-6, again with the addition of a cooling unit;
figure 17 shows the control logics diagram of the climatic chamber of figures 13-16.

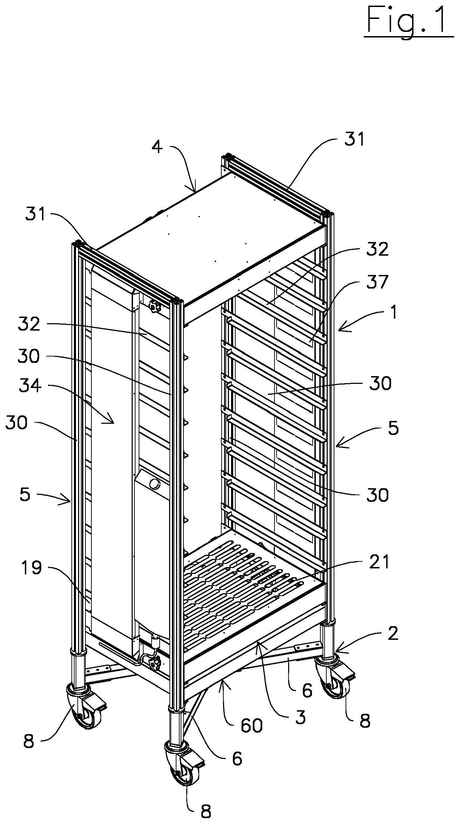

The climatic chamber shown by way of example in figures 1-11 comprises a load-bearing frame 1, preferably made of metal, in particular preferably anodized aluminum and steel, which is formed by mutually assembled and disassembled elements relative to a support carriage 2.

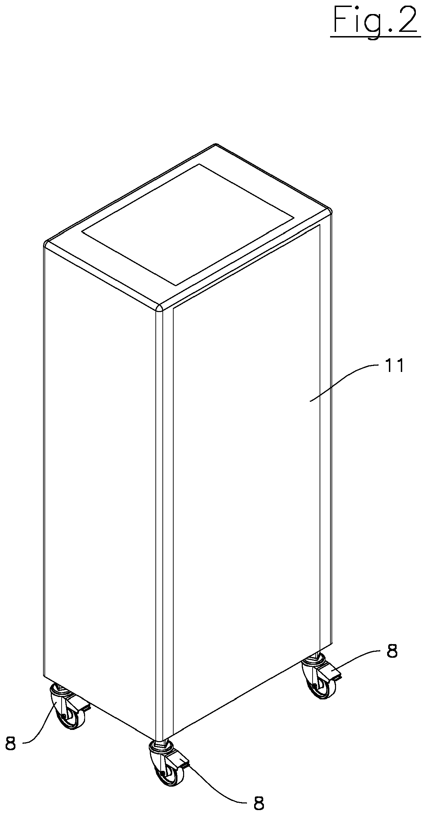

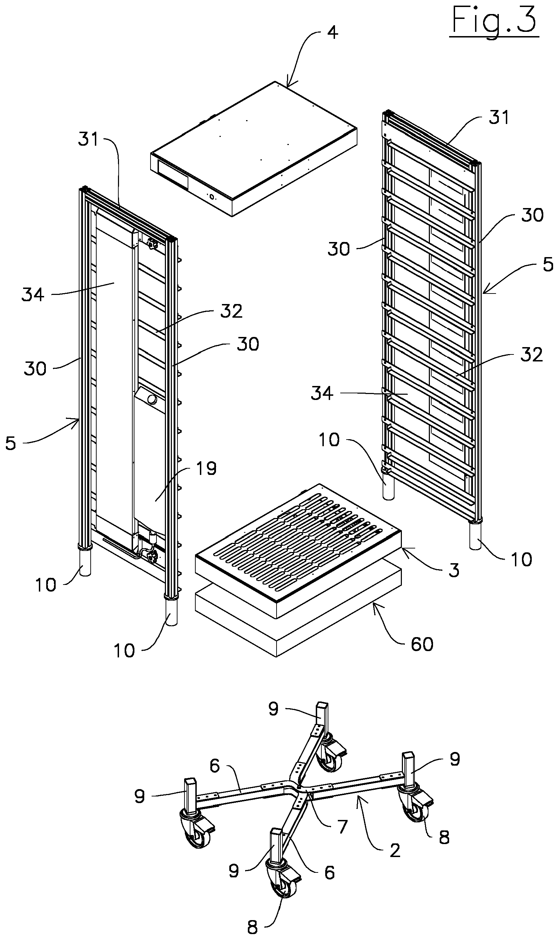

In particular, as shown in figures 1 and 2, the frame 1 is formed by a base element 3, a top element 4, and two lateral shoulders 5. In turn, the support carriage 2 consists of two crossed crossbars 6 hinged to each other at a vertical pin 7 (figure 3), which rest at their ends on freely rotatable casters 8 and have hollow vertical profiles 9 at the same ends into which corresponding vertical extensions 10 of the shoulders 5 of the frame 1 can be removably engaged.

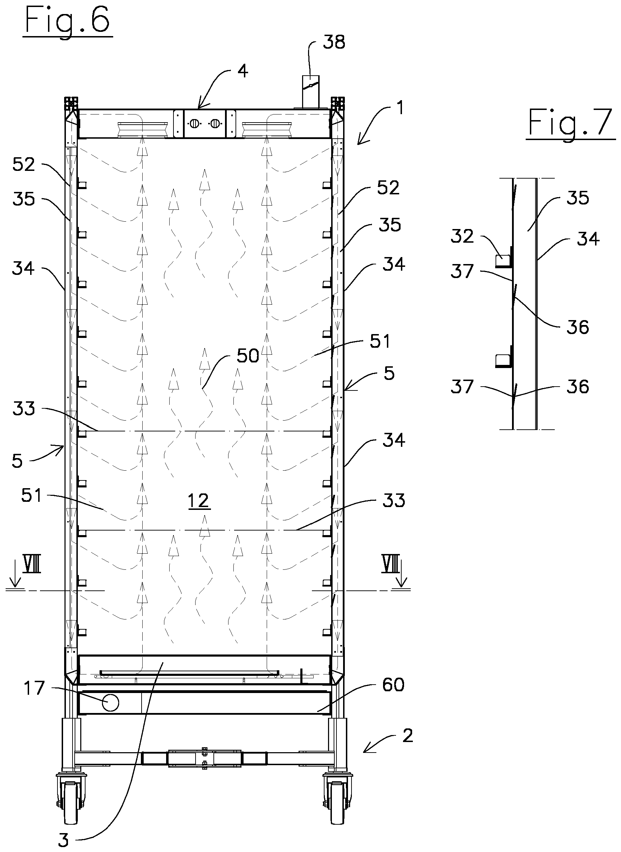

Once assembled and mounted on the carriage 2, the frame 1 can be covered with a high-performance thermic cover 11, preferably made of washable polyester with a reflective aluminum core, to create a closed operative space 12 (figure 6) within the frame itself which can be used for housing and heat-treating food of any kind.

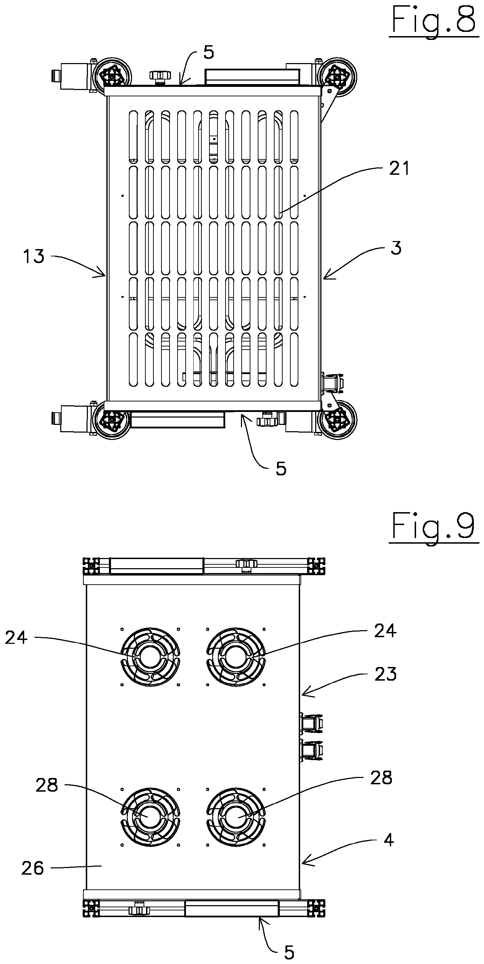

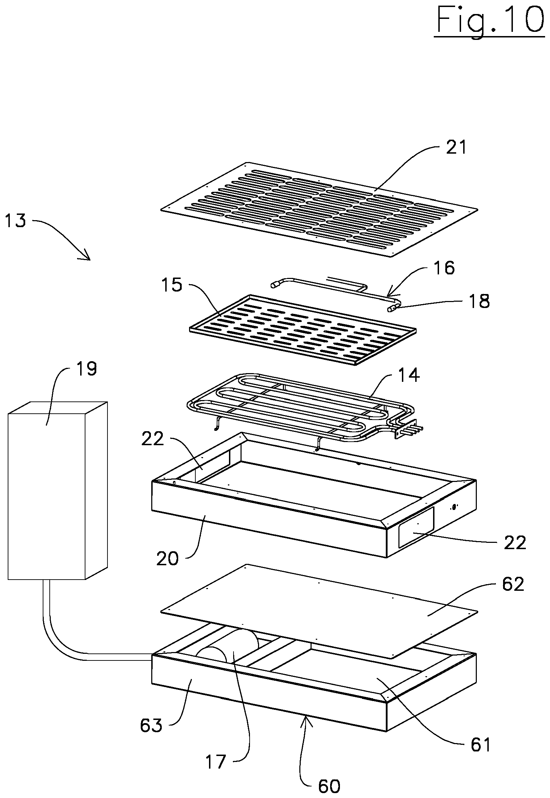

The base element 3 of the frame 1 comprises a heating unit 13 (figures 8 and 10), which, in turn, consists of an electric resistance 14, exemplified by two branches, onto which a perforated protective screen 15 is superimposed having the function of screening the thermal radiation, protecting the heating resistance 14 and being an evaporation plane for atomized water introduced by a high-pressure hydraulic humidification system 16, formed by a pump 17 and by atomizers 18, which by aspirating from a tank 19 integrated into one of the shoulders 5 (figure 6) produces the quantity of humidity necessary for the required heat treatment. The two branches of the electrical resistance 14 are housed within a containment casing 20 with a lid 21 to guarantee the passage of air. The containment casing 20 has two laterally offset side slits 22, the purposes of which will be clarified later.

The base element 3 of the casing 1 further comprises a unit 60 named technical compartment, formed by a casing 63 with a lid 62, in which the pump 17, the inlet of which is connected to the tank 19 and outlet of which is connected to the high-pressure hydraulic system 16, and a programmable logic controller 61 are inserted.

Said programmable logic controller 61, by means of dedicated and customized programs, manages, by means of single or concatenated routines, the heating assembly 3 by progressively adjusting the amount of energy used for the resistances 14, avoiding the overheating thereof. The same programmable logic controller 61 also manages the humidification unit 16, 17, 18 by managing the amount of water atomized onto the evaporation plane 15 thereby creating the required percentage of humidity within the operative space 12.

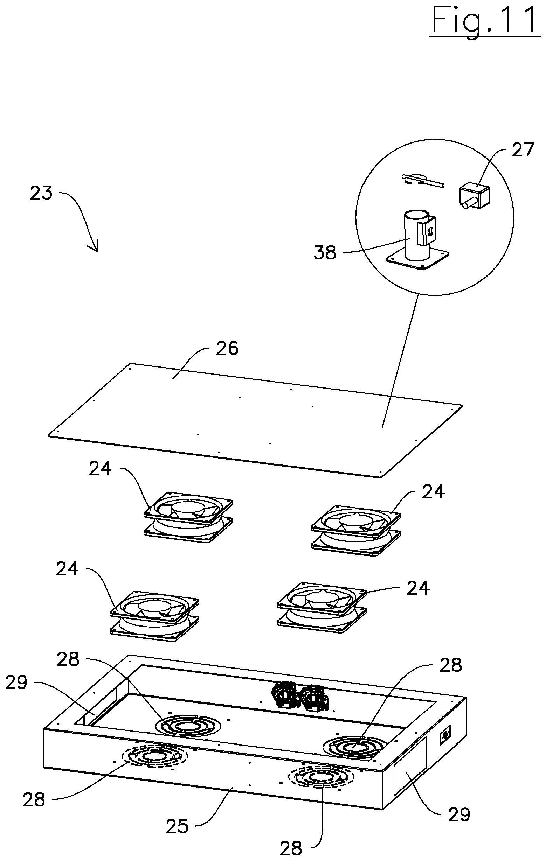

In turn, the top element 4 of the frame 1 comprises a ventilation unit 23 (figures 9 and 11), which consists of one or more axial fans 24 positioned at the bottom of a containment casing 25 with a lid 26 and communicating with the operative space 12 underneath (figure 6) through respective holes 28. The containment casing 25 has two laterally offset side slits 29, the purposes of which will be clarified later.

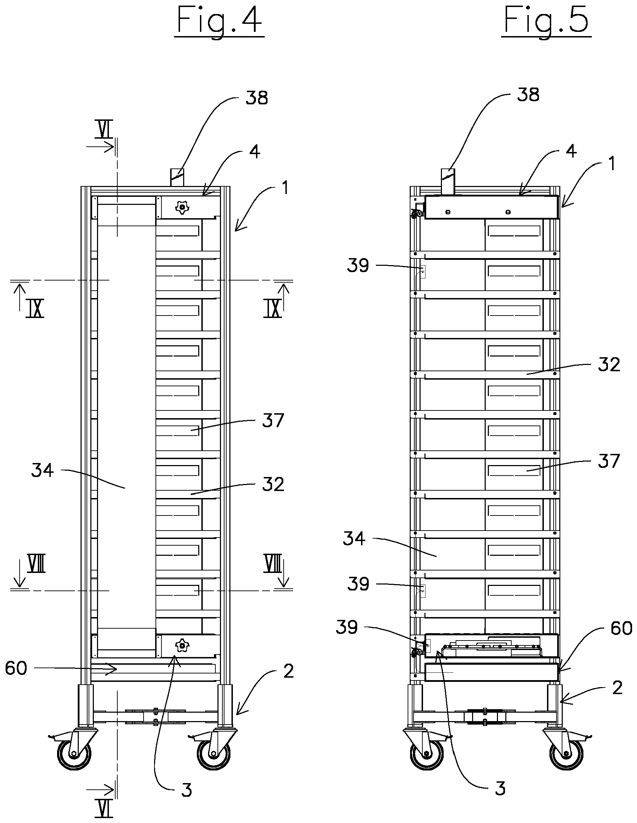

A vent and humidity control valve 38, managed by the programmable logic controller 61, which is indispensable for maintaining and partializing the humidity percentage, is positioned on said top element 4 (figures 4 and 5). The programmable logic controller 61 controls the actuating and regulating devices of said valve 38 if the humidity of the operative space 12 exceeds the set parameters.

The aforementioned controller 61 manages the ventilation unit 23 to manage the speed and thus the capacity of the axial fans 24, which allow for the correct uniformity of temperature and humidity by creating an upward airflow.

The lateral shoulders 5 substantially consist of a pair of side uprights 30, each provided on the bottom with a thinner vertical extension 10 suitable for engaging in a corresponding hollow profile 9 of the carriage 2. Each pair of uprights 30 is closed and consolidated on the top by crossbars 31, which together with the uprights 30 form substantially inverted U-shaped structures. Vertically equidistant horizontal rods 32 connect laterally and at different heights of the other shoulder 5, projecting inside the operative space 12, the two uprights 30 of each shoulder 5, forming with the corresponding rods 32, positioned in the same manner, lateral supports for trays or other containment planes 33 (some indicated by dashed lines) for the food to be subjected to heat treatment inside the space 12 (figure 6).

A rectangular plate 34 vertically extends between one and the other of the two uprights 30 of each shoulder 5, inside which plate respective vertical channels 35 are defined communicating on the bottom with the side slits 22 of the containment casing 20 of the heating unit 13 and on the top with the side slits 29 of the containment casing 25 of the ventilation unit 23.

Within the vertical channels 35, a plurality of deflectors 36 having a predetermined inclination are arranged at different equally spaced heights alternating, again vertically, with communication side slits 37 of the vertical channels 35 with the operative space 12 (figures 3, 4, and 7).

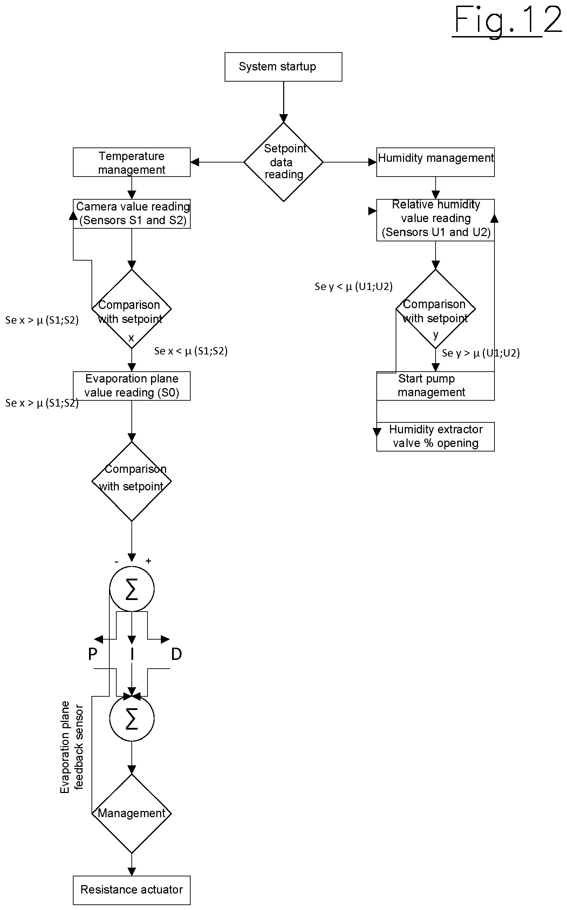

The described arrangement of the heating unit 13, the ventilation unit 23, and the shoulders 5 with the described arrangement and communication of the vertical channels 35 with deflectors 36 and the slits 22, 29, and 37 determines the following operating mode of the climatic chamber described above controlled by a logic system 61 such as that shown in figure 12.

Once the trays 33 with the food to be heated and/or regenerated have been placed inside the thermic space 12, using the supports formed by the rods 32 protruding from the uprights 30 for this purpose, and after the thermic space 12 has been closed by means of the thermic cover 11, the system is started by powering the electrical resistances 14 of the heating unit 13 and putting into operation either the humidification system, consisting of the tank 19, from which the pump 17 draws water by gravity and takes it to the atomizers 18 through the high-pressure hydraulic system 16 or the dehumidification system, consisting of the extraction valve 38, controlled by an electric actuator 27.

As shown in figure 6, the heated air 50 supplied by the heating unit 13 (figures 8 and 10) by convection rises into the operative space 12 and is drawn in by the ventilation unit 23 (figures 9 and 11), reaching the containment casing 25 of the fans 24 of the ventilation unit 23 and from there reaching through the side slits 29 (appropriately adjusted) the top of the channels 35, which act as ventilation channels for the entire climatic chamber. The deflectors 36 and the slits 37 present in the vertical plates 34 progressively divert part 51 of the descending thermal flow 52 through the channels 35, ensuring a substantially uniform temperature for the entire height of the thermic space and thus for all the food inserted therein. The recycling of the hot air from the ventilation channels 35 ends inside the heating unit 13 through the side slits 22 of the containment casing 20 of the heating unit. In this manner, part of the air introduced into the channels 35 by the ventilation unit 23 is forced onto the heating elements 14 both to prevent overheating and to reheat the air by implementing upward convective motion in the chamber.

The sensors 39 located at appropriately chosen positions (figure 5) of the thermic space 12 read the thermo-hygrometric values of the chamber at the various aforementioned positions for comparison with respective thermo-hygrometric values preset in the programmable logic programmer 61. A similar comparison, on the thermal value, is made at the evaporation plane 15 present inside the heating unit 13 to control the amount of thermal energy to be produced in the unit of time. According to the detected values, the control system 61 inserted in the compartment 60, operating as shown in figure 12, automatically manages the resistances 14 and the supply of water on the evaporation plane 15 present inside the heating unit 13 (humidification system).

The humidity extraction valve 38 present on top of the ventilation unit 23 (dehumidification system) is opened in a modulated manner by the programmable logic controller 61, which compares the humidity value detected by appropriate sensors with preset data suitable for the current thermo-hygrometric treatment.

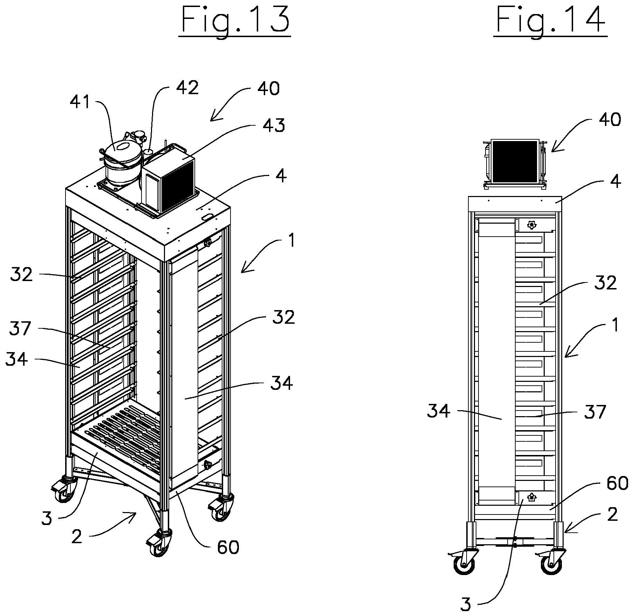

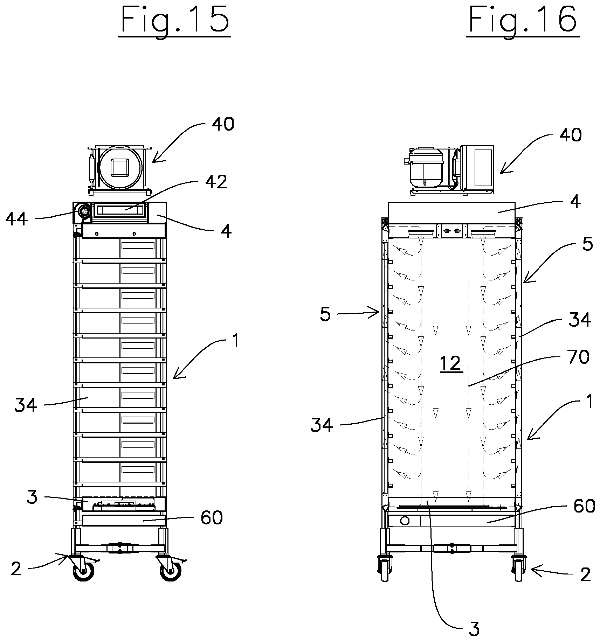

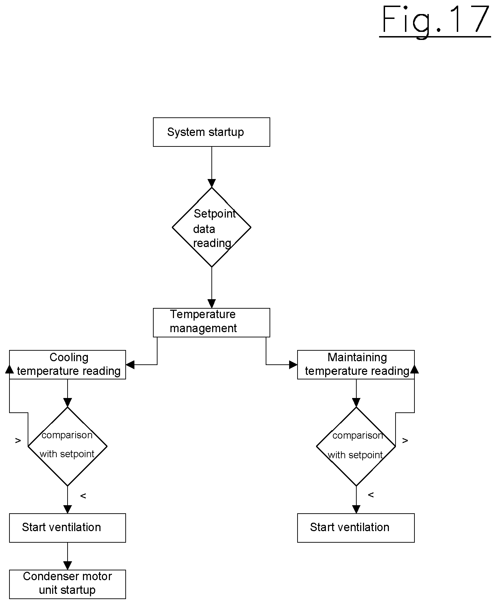

As shown in figures 13-16, the climatic chamber may also include a cooling unit 40, superimposed on the ventilation unit 23 and formed by a compressor 41, an external condenser 42, and an internal evaporation unit 43. Such cooling unit 40, included as an accessory, is used to operate an inverse cycle relative to the heat cycle, exploiting the channels 35 to aspirate air, making it pass through the evaporation unit 43 by virtue of a tangential fan 44 and reintroduce it into the thermic space 12 in the form of a descending air veil 70 which progressively re-enters into the channels 35 by means of the slits 37 and the deflectors 36. The cooling air circulation thus determined is shown in figure 16. The programmable logic programmer 61 inserted in the technical compartment 60, operating as shown in figure 17, regulates the cooling function.

The climatic chamber described above determines a series of advantages for the catering industry as listed below.

The quantitative benefits consist of greater efficiency during field service by halving of kitchen staff, obtaining savings in energy consumption and space used, and finally easier transportation.

With regard to savings in terms of personnel, the climatic chamber according to the invention makes it possible to shorten the downtime before service and optimize the use of personnel whose task is to regenerate the food before service begins. Comparing this to using a traditional oven, which requires four people for a hypothetical service of 150-200 meals, the personnel employed can be reduced by up to 50%. In other words, instead of employing four people who start service four hours earlier using two ovens for 120-150 diners, only two people are needed to start service two hours earlier with two climatic chambers acting as a "buffer" for regeneration operations. Comparing the two situations, the first requires personnel to be present at all times, often resulting in downtime, while in the second case personnel can take advantage of the "buffer" effect of the climatic chamber, taking full advantage of the modern system of cooking food in the central site or at a more convenient production time, chilling it to +5°C and warming it at the time of service.

As for the savings in terms of energy consumption, starting from a comparison with the current art (oven with twenty GN1/1 trays), taking into account the minimum power consumption (30 kWh) and the time needed to reach the target temperature for each category of food, it results in a reduction of consumption of 40%. The climatic chamber according to the invention has an excellent energy consumption to active working volume ratio. Furthermore, considering a peak power consumption of at most maximum 2000 W and the maximum electrical power available in many catering situations, similar to a normal domestic condition (generally 3.5-5 kW), it opens up the possibility of circumventing the local electrical grid limitations, which often prevent the installation of kitchens on-site, if not by resorting to external generating sets, with major logistical complications. At the same time, there is also the possibility of using the electrical power network in all situations where the three-phase 16 A power supply is not available. Finally, the climatic chamber according to the invention is an excellent solution for low energy consumption and a consequent reduction in CO2 emissions.

In terms of space utilization, the climatic chamber according to the invention is developed vertically and its mobility system allows for space optimization, this being a factor that is often critical in real-world cases. Compared to a horizontal shelf system, as a function of the number of place settings and/or area occupied in the kitchen, the climatic chamber according to the invention makes it possible to reduce the space occupied by a meal by ten times. On the other hand, concerning the amount of assembled weight, the climatic chamber according to the invention can have an overall weight, in its basic version, of less than 40 kg with a consequent significant advantage over a traditional oven of the same volume, whose weight varies from 100 to 180 kg, with a reduction of the weight handled from two to five times. One of its peculiarities also relates to its possible disassembly into eight components, the individual weight of which is less than the occasionally handled weights, less than 15 kg according to the provisions of the law, which makes the individual parts of the climatic chamber perfectly suitable for handling by a single person, according to the regulations on the occupational safety (Annex XXXIII Legislative Decree. 81/08 and ISO 18211). When folded and disassembled, the carriage takes up minimal space, essentially reducing to one-third of its operational footprint.

This makes it possible to use it in places that are difficult to reach, such as multi-story historical buildings, where traditional systems (ovens) are precluded for reasons related to access to the premises. In addition, only one person is needed to assemble the climatic chamber.

On the other hand, with reference to the qualitative advantages, the climatic chamber according to the invention presents particular ease of use with easy access and use by all operators, not necessarily qualified kitchen personnel (chefs), by virtue of a remote electronic system by means of an app and the possibility of storing recipes and automatic modes of operation according to the dishes placed in the operative space.

The climatic chamber according to the invention also enables excellent quality of regenerated food. The vertically developed forced air convection system has an advantageous effect on food which requires a dry regeneration environment (crispy foods, baked goods, fried foods, etc.). Indeed, being more buoyant than dry air, humid air naturally rises vertically up the inner space facilitated by the suction of the fans. With regard to food which must be kept humid (meat, vegetables, pasta, etc.), the controlled air humidification system makes the climatic chamber particularly flexible and suitable for all delicate foods which are sensitive to thermal shocks. So, by virtue of the microcontroller control system integrated into the equipment, which allows the punctual monitoring of the thermo-hygrometric values, it is possible to recreate the most suitable climatic conditions for every need.

Finally, the climatic chamber can be provided with a program dedicated to thermal sanitization to be carried out according to HACCP protocols, guaranteeing the elimination of Listeria Monocytogenes bacteria.

The climatic chamber suggested according to the invention as an excellent alternative to traditional regenerating ovens, heating cabinets, and thermic covers for carriages, meeting the needs of operators, who are increasingly seeking versatile and multifunctional devices which offer more than one cooking, maintenance, and regeneration function and which allow them to make the most of the available space, as well as being easily transportable.

## Claims

1. Portable multifunctional climatic chamber for thermic treatment of food, comprising a vertically extending frame (1) formed by a base element (3), a top element (4) and a pair of lateral shoulders (5) which connect said base and top elements (3, 4) to define an operative space (12) which is provided with means (32) for positioning food-bearing planes (33) and is coverable with a thermic cover (11), wherein said base element (3) comprises a heating unit (13), said top element (4) comprises a ventilation unit (23) which is controllable to intake ascending air from said operative space (12) and said lateral shoulders (5) are provided with channelized vertical plates (35) run along by vertical channels (35) which communicate at the bottom with said heating unit (13) and further communicate at the top with said ventilation unit (23) so as to be run along by descending air flows when said ventilation unit (23) intakes ascending air (50) from said operative space (12), said vertical channels (35) being further in communication with said operative space (12) through transversal slits (37) formed at different heights in said channelized plates (34) and there being provided inside said channelized plates (34) oblique deflectors (36) alternated with said slits (37) to deviate partially into said operative space (12) the descending air flows (52) which run along said channels (35) when said ventilation unit (23) intakes air from said operative space (12).

2. Climatic chamber according to claim 1, **characterized in that** said ventilation unit (23) is also controllable to introduce air into said operative space (12) to form therein a descending air veil (70) which said transversal slits (37) and said deflectors (36) partially deviate into said channels (5) to form ascending air flows therein.

3. Climatic chamber according to claim 1 or 2, **characterized in that** said heating unit (13) comprises electric resistances (14) on which an evaporation plane (15) is placed for humidification water nebulized by a hydraulic humidification system (16).

4. Climatic chamber according to claim 1 or 2, **characterized in that** said ventilation unit (23) is adjusted by a programmable logic controller (61) according to thermohygrometric values detected by sensors (39) positioned in said operative space so as to manage the speed and therefore the delivery of axial fans (24) present in said ventilation unit (23) to make uniform the temperature and the humidity in said operative space (12).

5. Climatic chamber according to claim 2 or 3, **characterized by** comprising sensors (39) positioned in said operative space (12) to detect the thermohygrometric values inside said space (12) for their comparison with preset thermohygrometric values by a programmable logic controller (61) which manages the heating unit (13) through dedicated and personalized programs (13) to adjust progressively the quantity of energy available for the resistances (14) thereby avoiding overheating thererof, and the humidification group (16, 17, 18) by managing the quantity of water nebulized onto the evaporation plane (15), thereby creating the percent of humidity which is necessary inside the operative space (12).

6. Climatic chamber according to claim 1, **characterized by** comprising a vent valve (38) for maintaining and partializing the humidity, which is positioned on said top element (4).

7. Climatic chamber according to anyone of the preceding claims, **characterized by** comprising a cooling unit (40) placed on said ventilation unit (23) and provided with a tangential fan (44) for sucking air from said channels (35) and reintroduce it in cooled condition into said space (12) in the form of a descending air veil (70).

8. Climatic chamber according to claim 7, **characterized by** comprising a programmable logic controller (61) for said cooling unit (40).

9. Climatic chamber according to anyone of the preceding claims, **characterized in that** said base element (3), said top element (4) and said lateral shoulders (5) of said frame (1) are separably connected to each other and to a foldable support carriage (2) placed below.

## Patentansprüche

1. Tragbare multifunktionale Klimakammer zur thermischen Behandlung von Lebensmitteln, aufweisend: einen vertikal verlaufenden Rahmen (1), der aus einem Basiselement (3), einem oberen Element (4) und einem Paar seitlicher Schultern (5) gebildet ist, die das Basiselement und das obere Elemente (3, 4) verbinden, um einen Arbeitsraum (12) zu bilden, der mit einer Einrichtung (32) zum Positionieren von lebensmitteltragenden Ebenen (33) versehen ist und mit einer thermischen Abdeckung (11) abdeckbar ist, wobei das Basiselement (3) eine Heizeinheit (13) aufweist, das obere Element (4) eine Belüftungseinheit (23) aufweist, die steuerbar ist, um aufsteigende Luft aus dem Arbeitsraum (12) anzusaugen, und die seitlichen Schultern (5) mit kanalisierten vertikalen Platten (35) versehen sind, entlang derer vertikale Kanäle (35) verlaufen, die unten mit der Heizeinheit (13) und oben mit der Belüftungseinheit (23) in Verbindung stehen, um von absteigenden Luftströmen durchströmt zu werden, wenn die Belüftungseinheit (23) aufsteigende Luft (50) aus dem Arbeitsraum (12) ansaugt, wobei die vertikalen Kanäle (35) außerdem mit dem Arbeitsraum (12) durch Querschlitze (37) in Verbindung stehen, die in unterschiedlichen Höhen in den kanalisierten Platten (34) ausgebildet sind, und wobei im Inneren der kanalisierten Platten (34) schräge Umlenkeinrichtungen (36) vorgesehen sind, die sich mit den Schlitzen (37) abwechseln, um die absteigenden Luftströme (52), die entlang der Kanäle (35) strömen, wenn die Belüftungseinheit (23) Luft aus dem Arbeitsraum (12) ansaugt, teilweise in den Arbeitsraum (12) umzuleiten.

2. Klimakammer nach Anspruch 1,
**dadurch gekennzeichnet, dass** die Belüftungseinheit (23) außerdem steuerbar ist, um Luft in den Arbeitsraum (12) einzuleiten und darin einen absteigenden Luftschleier (70) zu bilden, den die Querschlitze (37) und die Umlenkeinrichtungen (36) teilweise in die Kanäle (5) umlenken, um darin aufsteigende Luftströme zu bilden.

3. Klimakammer nach Anspruch 1 oder 2,
**dadurch gekennzeichnet, dass** die Heizeinheit (13) elektrische Widerstände (14) aufweist, auf denen eine Verdunstungsebene (15) für von einem hydraulischen Befeuchtungssystem (16) vernebeltes Befeuchtungswasser angeordnet ist.

4. Klimakammer nach Anspruch 1 oder 2,
**dadurch gekennzeichnet, dass** die Belüftungseinheit (23) durch eine programmierbare logische Steuerung (61) in Übereinstimmung mit thermohygrometrischen Werten eingestellt wird, die von im Arbeitsraum angeordneten Sensoren (39) erfasst werden, um die Geschwindigkeit und damit die Leistung von in der Belüftungseinheit (23) vorhandenen Axialventilatoren (24) zu steuern und so die Temperatur und die Feuchtigkeit in dem Arbeitsraum (12) zu vereinheitlichen.

5. Klimakammer nach Anspruch 2 oder 3,
**gekennzeichnet durch** Sensoren (39), die in dem Arbeitsraum (12) angeordnet sind, um die thermohygrometrischen Werte innerhalb des Raums (12) zu erfassen und sie mit vorgegebenen thermohygrometrischen Werten durch eine programmierbare logische Steuerung (61) zu vergleichen, die die Heizeinheit (13) durch spezielle und personalisierte Programme (13) handhabt, um die für die Widerstände (14) verfügbare Energiemenge fortlaufend anzupassen und dadurch Überhitzung derselben zu vermeiden, sowie die Befeuchtungsgruppe (16, 17, 18) durch Handhabung der auf die Verdunstungsebene (15) vernebelten Wassermenge handhabt, um dadurch den in dem Arbeitsraum (12) erforderlichen Feuchtigkeitsprozentsatz zu erzeugen.

6. Klimakammer nach Anspruch 1,
**dadurch gekennzeichnet, dass** sie ein Entlüftungsventil (38) zum Aufrechterhalten und Aufteilen der Feuchtigkeit umfasst, das an dem oberen Element (4) angeordnet ist.

7. Klimakammer nach einem der vorhergehenden Ansprüche,
**dadurch gekennzeichnet, dass** sie eine Kühleinheit (40) umfasst, die auf der Belüftungseinheit (23) angeordnet und mit einem Tangentialventilator (44) ausgestattet ist, um Luft aus den Kanälen (35) anzusaugen und sie in gekühltem Zustand in Form eines absteigenden Luftschleiers (70) wieder in den Raum (12) einzuleiten.

8. Klimakammer nach Anspruch 7,
**dadurch gekennzeichnet, dass** sie eine programmierbare logische Steuerung (61) für die Kühleinheit (40) aufweist.

9. Klimakammer nach einem der vorhergehenden Ansprüche,
**dadurch gekennzeichnet, dass** das Basiselement (3), das obere Element (4) und die seitlichen Schultern (5) des Rahmens (1) lösbar miteinander verbunden sind und mit einem darunter angeordneten, klappbaren Tragschlitten (2) lösbar verbunden sind.

## Revendications

1. Chambre climatique multifonction portable pour le traitement thermique d'aliments, comprenant un cadre (1) s'étendant verticalement formé d'un élément de base (3), d'un élément supérieur (4) et une paire d'épaulements latéraux (5) qui relient lesdits éléments de base et supérieur (3, 4) pour définir un espace opérationnel (12) qui est pourvu de moyens (32) pour positionner des plans de support d'aliments (33) et qui peut être recouvert d'un couvercle thermique (11), dans laquelle ledit élément de base (3) comprend une unité de chauffage (13), ledit élément supérieur (4) comprend une unité de ventilation (23) qui peut être commandée pour aspirer de l'air ascendant à partir dudit espace opérationnel (12) et lesdits épaulements latéraux (5) sont pourvus de plaques verticales canalisées (35) parcourues par des canaux verticaux (35) qui communiquent en bas avec ladite unité de chauffage (13) et communiquent en outre en haut avec ladite unité de ventilation (23) de manière à être parcourues par des flux d'air descendants lorsque ladite unité de ventilation (23) aspire de l'air ascendant (50) depuis ledit espace opérationnel (12), lesdits canaux verticaux (35) étant en outre en communication avec ledit espace opérationnel (12) par l'intermédiaire de fentes transversales (37) formées à différentes hauteurs dans lesdites plaques canalisées (34) et à l'intérieur desdites plaques canalisées (34), des déflecteurs obliques (36) sont disposés en alternance avec lesdites fentes (37) pour dévier partiellement dans ledit espace opérationnel (12) les flux d'air descendants (52) qui circulent le long desdits canaux (35) lorsque ladite unité de ventilation (23) aspire de l'air depuis ledit espace opérationnel (12).

2. Chambre climatique selon la revendication 1, **caractérisée en ce que** ladite unité de ventilation (23) peut également être commandée pour introduire de l'air dans ledit espace opérationnel (12) afin de former un voile d'air descendant (70) que lesdites fentes transversales (37) et lesdits déflecteurs (36) dévient partiellement dans lesdits canaux (5) pour former des flux d'air ascendants dans ceux-ci.

3. Chambre climatique selon la revendication 1 ou 2, **caractérisée en ce que** ladite unité de chauffage (13) comprend des résistances électriques (14) sur lesquelles un plan d'évaporation (15) est placé pour l'eau d'humidification nébulisée par un système d'humidification hydraulique (16).

4. Procédé selon la revendication 1 ou 2, **caractérisé en ce que** ladite unité de ventilation (23) est réglée par un automate programmable (61) en fonction de valeurs thermohygrométriques détectées par des capteurs (39) positionnés dans ledit espace opérationnel de manière à gérer la vitesse et donc le débit de ventilateurs axiaux (24) présents dans ladite unité de ventilation (23) pour uniformiser la température et l'humidité dans ledit espace opérationnel (12).

5. Chambre climatique selon la revendication 2 ou 3, **caractérisée en ce qu'**elle comprend des capteurs (39) positionnés dans ledit espace opérationnel (12) pour détecter les valeurs thermohygrométriques à l'intérieur dudit espace (12) afin de les comparer à des valeurs thermohygrométriques prédéfinies par un automate programmable (61) qui gère l'unité de chauffage (13) au moyen de programmes dédiés et personnalisés (13) pour ajuster progressivement la quantité d'énergie disponible pour les résistances (14), évitant ainsi leur surchauffe, et le groupe d'humidification (16, 17, 18) en gérant la quantité d'eau nébulisée sur le plan d'évaporation (15), créant ainsi le pourcentage d'humidité qui est nécessaire à l'intérieur de l'espace opérationnel (12).

6. Chambre climatique selon la revendication 1, **caractérisée en ce qu'**elle comprend une vanne d'évent (38) pour maintenir et partialiser l'humidité, qui est positionnée sur ledit élément supérieur (4).

7. Chambre climatique selon l'une quelconque des revendications précédentes, **caractérisée en ce qu'**elle comprend une unité de refroidissement (40) placée sur ladite unité de ventilation (23) et pourvue d'un ventilateur tangentiel (44) pour aspirer l'air à partir desdits canaux (35) et réintroduire celui-ci à l'état refroidi dans ledit espace (12) sous la forme d'un voile d'air descendant (70).

8. Chambre climatique selon la revendication 7, **caractérisée en ce qu'**elle comprend un automate programmable (61) pour ladite unité de refroidissement (40).

9. Chambre climatique selon l'une quelconque des revendications précédentes, **caractérisée en ce que** ledit élément de base (3), ledit élément supérieur (4) et lesdits épaulements latéraux (5) dudit cadre (1) sont reliés de manière amovible les uns aux autres et à un chariot de support pliable (2) placé au-dessous.
